# EUROPEAN PATENT APPLICATION

(11) **EP 1 939 900 A1**
(43) Date of publication of application: **02.07.2008**
(21) Application number: 07150434.4
(22) Date of filing: 27.12.2007
(51) Int. Cl.: H01F 1/36, H01F 1/00

(54) **Magnetic particles, method for producing same, and biochemical carrier**

(30) Priority: 28.12.2006 JP 2006355631
(71) Applicant: JSR Corporation, Tokyo 104-8410 (JP)
(72) Inventor: Tamori, Kouji, Chuo-ku Tokyo 104-8410 (JP); Takamoto, Eiji, Chuo-ku Tokyo 104-8410 (JP); Kawai, Takahiro, Chuo-ku Tokyo 104-8410 (JP)
(74) Representative: TBK-Patent

(57) **Abstract**

Magnetic particles comprise magnetic mother particles (A) having a particle diameter of d and non-magnetic child particles (B) having a particle diameter of d/2 or less stacked on the surface of the magnetic mother particles (A).

## Description

### BACKGROUND OF THE INVENTION

The present invention relates to magnetic particles exhibiting minimal elution of biochemical reaction-interfering substances such as an iron ion and having high biochemical bonding capacity, a method for producing such magnetic particles, and a biochemical carrier.

In recent years, magnetic particles can offer an excellent reaction field such as an immunological reaction of an antigen and an antibody, hybridization of DNAs, or hybridization of DNA and RNA. Since a supernatant liquid may be easily separated with the use of magnetism when using magnetic particles, application particularly to diagnostics and research of medical supplies is actively undertaken.

JP-A-2006-275600 filed by the applicant of this application discloses magnetic particles free from problems, such as dissociation of magnetic materials and elution of an iron ion, and having excellent biochemical bonding capacity. However, further improvement of biochemical bonding capacity is desired.

### SUMMARY

The invention provides magnetic particles having a higher biochemical bonding capacity than the magnetic particles disclosed in JP-A-2006-275600, a method for producing such magnetic particles, and a biochemical carrier.

The inventors of this application have found that magnetic particles containing magnetic mother particles (A) having a particle diameter of d and non-magnetic child particles (B) having a particle diameter of d/2 or less stacked on the surface of the magnetic mother particles (A) exhibit outstanding biochemical bonding capacity due to the possession of an increased amount of surface irregularities and a large surface area per unit weight. This finding has led to the completion of the invention.

Magnetic particles according to one aspect of the invention comprise magnetic mother particles (A) having a particle diameter of d and non-magnetic child particles (B) having a particle diameter of d/2 or less stacked on the surface of the magnetic mother particles (A).

The above-mentioned magnetic particles may further comprise a water-soluble polymer (C) existing between the stacked non-magnetic child particles (B).

The above-mentioned magnetic particles may further comprise a polymer layer (D) covering the magnetic mother particles (A) and the non-magnetic child particles (B).

A method for producing magnetic particles according to one aspect of the invention comprises mixing, in an aqueous medium, magnetic mother particles (A) with a particle diameter of d, having positive or negative surface charges in the aqueous medium, non-magnetic child particles (B) with a particle diameter of d/2 or less, having negative or positive surface charges in the aqueous medium, and a water-soluble polymer (C) having positive or negative charges in the aqueous medium, to cause the non-magnetic child particles (B) to be adsorbed on the surface of the magnetic mother particles (A), the water-soluble polymer (C) existing between the non-magnetic child particles (B).

The above method may further comprise covering the composite particles obtained in the above adsorption with a polymer layer (D).

A method for producing magnetic particles according to one aspect of the invention comprises:
a first step of mixing, in an aqueous medium, magnetic mother particles (A) with a particle diameter of d, having positive or negative surface charges in an aqueous medium, non-magnetic child particles (B) with a particle diameter of d/2 or less, having negative or positive surface charges in the aqueous medium to cause the non-magnetic child particles (B) to be adsorbed on the surface of the magnetic mother particles (A);
a second step of mixing, in the aqueous medium, the first composite particles obtained in the first step with a water-soluble polymer (C) having positive or negative charge in the aqueous medium, to cause the water-soluble polymer (C) to be adsorbed between the non-magnetic child particles (B); and
a third step of mixing, in the aqueous medium, the non-magnetic child particles (B) having negative or positive surface charges in the aqueous medium with the second composite particles obtained in the second step to cause the non-magnetic child particles (B) to be adsorbed on the surface of the second composite particles.

The above method may further comprise a fourth step of covering the third composite particles obtained in the third step with the polymer layer (D).

In the above method for producing the magnetic particles, the magnetic mother particles (A) may have positive surface charges in the above aqueous medium and the magnetic child particles (B) may have negative surface charges in the above aqueous medium, and the water-soluble polymer (C) may have positive charges in the above aqueous medium.

A biochemical carrier according to one aspect of the invention is obtained by the above method for producing the magnetic particles.

Using the above-mentioned magnetic particles, outstanding biochemical bonding capacity can be obtained due to a large surface area per unit weight.

According to the above method for producing magnetic particles, magnetic particles containing the magnetic mother particles (A) having a particle diameter of d and the non-magnetic child particles (B) having a particle diameter of d/2 or less stacked on the surface of the magnetic mother particles (A) can be obtained in a simple and easy method.

Using the above-mentioned biochemical carrier, outstanding biochemical bonding capacity can be obtained without elusion of biochemical reaction-interfering substances such as an iron ion due to a large surface area per unit weight.

### BRIEF DESCRIPTION OF THE SEVERAL VIEWS OF THE DRAWING

FIG 1 is an SEM photograph of the magnetic particles (1) obtained in Example 1.
FIG. 2 is an SEM photograph of the first composite magnetic particles (P1-1) obtained in Comparative Example 1.

### DETAILED DESCRIPTION OF THE EMBODIMENT

Magnetic particles according to one embodiment of the invention, a method for producing the same, and a biochemical carrier are described in detail below.

### 1. Magnetic particles

Magnetic particles in this embodiment comprise magnetic mother particles (A) having a particle diameter of d and non-magnetic child particles (B) having a particle diameter of d/2 or less. The non-magnetic child particles (B) are stacked on the surface of the magnetic mother particles (A). The term "the non-magnetic child particles (B) are stacked on the surface of the magnetic mother particles (A)" indicates a state in which further non-magnetic child particles (B) are on the non-magnetic child particles (B) which are on the surface of the magnetic mother particles (A), and includes not only (1) the case in which the non-magnetic child particles (B) are in contact with the surface of the magnetic mother particles (A) or are in contact with other non-magnetic child particles (B), but also (2) the case, when the later-described water-soluble polymer (C) is included in the magnetic particles according to this embodiment, in which the non-magnetic child particles (B) are neither in contact with the surface of the magnetic mother particles (A) nor in contact with other non-magnetic child particles (B), but the non-magnetic child particles (B) are in the state in which the contact with the surface adjoining particles (magnetic mother particles (A) and/or non-magnetic child particles (B)) is lost. In this case, the water-soluble polymer (C) may exist between the non-magnetic child particles (B) and the magnetic mother particles (A) or between the non-magnetic child particles (B) and other non-magnetic child particles (B).

In the magnetic particles according to this embodiment, the non-magnetic child particles (B) may be in the conditions of (1) and (2) above or in the condition of either (1) or (2) above on the surface of the magnetic mother particles (A).

The magnetic particles according to this embodiment preferably have two or more covering layers of the non-magnetic child particles (B) on the surface of the magnetic mother particles (A).

The non-magnetic child particles (B) may be present in the state of being adsorbed on the surface of the magnetic mother particles (A) and the non-magnetic child particles (B), or in the state of being immobilized on the surface or above the surface of adjoining particles (of the magnetic mother particles (A) and/or the non-magnetic child particles (B)). In the case in which the non-magnetic child particles (B) are adsorbed on the surface of adjoining particles, such adsorption may be either chemical adsorption or physical adsorption.

As a method for immobilizing the non-magnetic child particles (B) on or above the surface of the magnetic mother particles (A) and the non-magnetic child particles (B), a method of covering the magnetic mother particles (A) and the non-magnetic child particles (B) with a layer of other materials (for example, the later-described layer of the water-soluble polymer (C) or the polymer layer (D)) can be given.

The particle diameter of the magnetic particles according to this embodiment is from 0.1 to 10 micrometers, and preferably from 0.2 to 5 micrometers. When the particle diameter is less than 0.1 micrometers, a sufficient magnetic response cannot be exhibited, it requires a considerably long period of time to separate the particles, and significant magnetism is needed for separation. On the other hand, when the particle diameter is more than 10 micrometers, the particles easily precipitate in a dispersion medium. Thus, if the particle diameter is more than 10 micrometers, not only it is necessary to stir the dispersion medium in order to trap target particles, but also it is difficult to trap a sufficient amount of target particles due to a reduced proportion of the surface area per unit weight of the particles.

The magnetic particles according to this embodiment may be used by dispersing in a dispersion medium. As an example of the dispersion medium, an aqueous medium can be given. There are no specific limitations to the aqueous medium. Water and water containing aqueous solvents can be given as examples. As examples of the aqueous solvents, alcohols (for example, ethanol, alkylene glycols, monoalkyl ethers, etc.) can be given. The dispersion medium may contain a dispersing agent.

Owing to a larger specific surface area, the magnetic particles according to this embodiment have a higher biochemical bonding capacity than the magnetic particles disclosed in JP-A-2006-275600.

### 1.1. Magnetic mother particles (A)

Description of the magnetic mother particles (A) in JP-A-2006-275600 applies to the structure and production of the magnetic mother particles (A) in this invention. The magnetic fine particles preferably comprise nuclear particles (a), magnetic fine particles (b), and a mother particle coating layer (c).

### 1.1.1. Structure and production of magnetic mother particles (A)

The magnetic mother particles (A) are fine particles of known materials which can be magnetically collected, and their particle diameter of d is preferably from 0.1 to 10 micrometers, more preferably from 0.2 to 5 micrometers, and still more preferably from 0.5 to 3 micrometers. If the particle diameter is less than 0.1 micrometers, it may take a long time for separation and purification using magnetism; and if more than 10 micrometers, the biochemical bonding capacity of the particles may be too small.

The magnetic mother particles (A) may be either homogeneous magnetic particles or heterogeneous magnetic particles. However, most of the homogeneous magnetic particles having a particle size in the above-mentioned preferable range are paramagnetic. If repeatedly separated and refined by magnetism, the magnetic particles may lose their capability of being redispersed in dispersion media. For this reason, the magnetic mother particles (A) are preferably heterogeneous particles containing the magnetic fine particles (b) of fine superparamagnetic particles exhibiting least residual magnetization. As the inner structure of the magnetic mother particles (A) having such a heterogeneous structure, (i) a structural magnetic body of a non-magnetic core (nuclear particles) of a polymer or the like and a shell of a secondary aggregate (magnetic layer) of magnetic fine particles, (ii) a structure consisting of a secondary aggregate of magnetic fine particles as a core and a non-magnetic material such as a polymer layer as a shell, and (iii) a structure in which the magnetic fine particles (b) are dispersed in a continuous phase of a non-magnetic material such as a polymer, and the like can be given.

In the structure (i), the magnetic mother particles (A) may contain, for example, the nuclear particles (a) and the magnetic fine particles (b) existing on the surface of the nuclear particles (a). In this case, the magnetic mother particles (A) can be obtained by, for example, causing the magnetic fine particles (b) to be physically adsorbed on the surface of the nuclear particles (a). The term "magnetic fine particles (b) existing on the surface of the nuclear particles (a)" includes, (1) the case in which the magnetic fine particles (b) are in contact with the surface of the nuclear particles (a), and (2) the case in which, when the magnetic mother particles (A) include a mother particle coating layer (c), described later, for example, the magnetic fine particles (b) are not in contact with the surface of the nuclear particles (a), but the contact of the magnetic fine particles (b) with the surface of the nuclear particles (a) is lost. In the magnetic mother particles (A), the magnetic fine particles (b) may be in the state of either (1) or (2) above on the surface of the nuclear particles (a).

In this case, in the magnetic mother particles (A), it is preferable that a plurality of the magnetic fine particles (b) exist covering the surface of the nuclear particles (a), and more preferably a plurality of the magnetic fine particles (b) form a covering layer (a magnetic layer) with a uniform thickness.

Furthermore, in this case, the magnetic mother particles (A) may contain a mother particle coating layer (c) covering the nuclear particles (a) and the magnetic fine particles (b). The magnetic mother particles (A) can be obtained by, for example, causing the magnetic fine particles (b) to be physically adsorbed on the surface of the nuclear particles (a), and then forming the mother particle coating layer (c) which covers the nuclear particles (a) and the magnetic fine particles (b) by polymerization. Inclusion of the mother particle coating layer (c) in the magnetic mother particles (A) can ensure that the magnetic fine particles (b) are present on the surface of the nuclear particles (a), thereby effectively preventing the magnetic fine particles (b) from eluting.

In the invention, "physical adsorption" refers to adsorption not involving a chemical reaction. As the principle of "physical adsorption", hydrophobic/hydrophobic adsorption, molten bonding or adsorption, fusion bonding or adsorption, hydrogen bonding, Van der Waals bonding, and the like can be given, for example. As the method for hydrophobic/hydrophobic adsorption, for example, a method of selecting the nuclear particles (a) and magnetic fine particles both of which the surface is hydrophobic or hydrophobized and dry-blending these nuclear particles (a) and magnetic fine particles (b), or a method of sufficiently dispersing the nuclear particles (a) and the magnetic fine particles (b) in a solvent (e.g. toluene and hexane) with good dispersibility without damaging both of the particles, followed by vaporization of the solvent while mixing can be given.

It is also possible to make complex particles by utilizing molten bonding or adsorption, or fusion bonding or adsorption, by selecting a material or a solvent which can more or less dissolve the surface of the nuclear particles (a) and the surface of the magnetic fine particles (b) and/or by selecting temperature conditions when mixing.

Alternatively, a method realizing a complex of the nuclear particles (a) and the magnetic fine particles (b) by physically applying a strong external force is effective. As examples of the method for physically applying a strong force, a method of using a mortar, an automatic mortar, or a ball mill; a blade-pressuring type powder compressing method; a method utilizing a mechanochemical effect such as a mechanofusion method; and a method using impact in a high-speed air stream such as a jet mill, a hybridizer, or the like can be given. In order to efficiently produce a firmly bound complex, a strong physical adsorption force is desirable. As the method, stirring using a vessel equipped with a stirrer at a stirring blade peripheral velocity of preferably 15 m/sec or more, more preferably 30 m/sec or more, and still more preferably from 40 to 150 m/sec can be given. If the stirring blade peripheral velocity is less than 15 m/sec, sufficient energy for causing the magnetic fine particles (b) to be adsorbed on the surface of the nuclear particles (a) may not be obtained. Although there are no specific limitations to the upper limit of the stirring blade peripheral speed, the upper limit of the peripheral speed is determined according to the apparatus to be used, energy efficiency, and the like.

In the structure (ii), the magnetic mother particles (A) may contain, for example, a secondary aggregate of the magnetic fine particles (b) and the polymer particles (d) existing on the surface of the secondary aggregate of the magnetic fine particles (b).

In the structures (ii) and (iii), the magnetic mother particles (A) may be the polymer particles (d) containing the magnetic fine particles (b), for example, and the magnetic fine particles (b) may be dispersed in the polymer particles (d).

Among the structures (i) to (iii) above, the inner structure (i), that is, a structure consisting of a core of a non-magnetic material such as a polymer (nuclear particles) and a shell of a secondary aggregate of the magnetic fine particles (b), is preferable for the magnetic mother particles (A).

### 1.1.2. Nuclear particles (a)

The nuclear particles are basically made from a non-magnetic substance which can be either an organic substance or an inorganic substance, but preferably an organic substance. Polymers can be given as a typical organic material. As the polymer, vinyl polymers are particularly preferable. As examples of vinyl monomers for producing such vinyl polymers, aromatic vinyl monomers such as styrene, alpha-methylstyrene, styrene halide, and divinylbenzene; vinyl esters such as vinyl acetate and vinyl propionate; unsaturated nitriles such as acrylonitrile; and ethylenically unsaturated alkyl carboxylates such as methyl acrylate, ethyl acrylate, ethyl methacrylate, butyl acrylate, butyl methacrylate, 2-ethylhexyl acrylate, 2-ethylhexyl methacrylate, lauryl acrylate, lauryl methacrylate, ethylene glycol diacrylate, ethylene glycol dimethacrylate, cyclohexyl acrylate, and cyclohexyl methacrylate can be given. The vinyl polymer may be a homopolymer or may be a copolymer comprising two or more monomers selected from the above-mentioned vinyl monomers. Also, a copolymer of the above-mentioned vinyl monomers and copolymerizable monomers such as conjugated diolefins such as butadiene and isoprene, acrylic acid, methacrylic acid, acrylamide, methacrylamide, glycidyl acrylate, glysidyl methacrylate, N-methylol acrylamide, N-methylol methacrylamide, 2-hydroxyethyl acrylate, 2-hydroxyethyl methacrylate, diallyl phthalate, allyl acrylate, allyl methacrylate, trimethylolpropane triacylate, and trimethylolpropane trimethacrylate can be used.

The average particle diameter of the nuclear particles (a) is preferably from 0.1 to 10 micrometers, more preferably from 0.2 to 5 micrometers, and most preferably from 0.3 to 2 micrometers.

When the nuclear particles (a) are polymer particles having the average particle diameter of the specific ranges mentioned above, such polymer particles can be obtained by, for example, suspension polymerization of vinyl monomers or pulverization of a polymer bulk. The nuclear polymer particles (a) having a uniform particle diameter can be easily prepared by, for example, a swelling polymerization method described in JP-B-57-24369, a polymerization method described in J. Polym. Sci., Polymer Letter Ed. 21, 937 (1983), a method described in JP-A-61-215602, a polymerization method described JP-A-61-215603, or a polymerization method described in JP-A-61-215604.

### 1.1.3. Magnetic fine particles (b)

Although there are no particular limitations, iron oxides, including ferrite represented by the formula MFe₂O₄ (M = Co, Ni, Mg, Cu, Li_{0.5}Fe_{0.5}, etc.), magnetite represented by Fe₃O₄, and gamma-Fe₂O₃, are typical materials of the magnetic fine particles (b). In particular, as magnetic materials having high saturated magnetization and low residual magnetization, gamma-Fe₂O₃ and Fe₃O₄ are preferable.

The average particle diameter of the magnetic fine particles (b) is preferably 1/5 or less, more preferably 1/10 or less, and still more preferably 1/20 or less of the particle diameter of the nucleic particles (a). If the average particle diameter of the magnetic fine particles (b) is more than 1/5 of the particle diameter of the nucleic particles (a), a covering layer of the magnetic fine particles (b) with a uniform and sufficient thickness may not be formed on the surface of the nucleic particles.

In addition, from the viewpoint of ensuring redispersibility after separation and purification using magnetization, magnetic fine particles (b) with small residual magnetization are preferable. For this reason, fine particles of ferrite and/or magnetite with a particle diameter of about 5 to 20 nm, for example, can be preferably used as the magnetic fine particles (b).

Magnetic fine particles (b) of which the surface has been hydrophobicized may be used. Although there are no particular limitations to the method for hydrophobicizing the surface of the magnetic fine particles (b), a method of causing a compound having a part with extremely high affinity with the magnetic fine particles (b) and a hydrophobic part in a molecule to come into contact with the magnetic fine particles (b) and to bond such a compound to the magnetic fine particles (b) can be given as an example. As examples of such a compound, a silane compound represented by a silane coupling agent and a surfactant represented by a long-chain fatty acid soap can be given.

Hydrophobicizing with a silane compound increases chemical resistance, particularly alkali resistance, and effectively prevents delamination of the magnetic material by removal of hydrophobic parts while in use, degradation of magnetic performance, and mixing of contaminants into the system due to floating of the removed magnetic fine particles (b) and surfactants. In the invention, the magnetic fine particles (b) are regarded to have a sufficiently hydrophobicized surface when the magnetic fine particles (b) can be excellently dispersed in toluene, for example.

As examples of the silane compound represented by the silane coupling agent, vinyltrichlorosilane, vinyltrimethoxysilane, vinyltris(beta-methoxyethoxy)silane, beta-(3,4-epoxycyclohexyl)ethyltrimethoxysilane, gamma-glycidoxypropyltrimethoxysilane, gamma-methacryloxypropyltrimethoxysilane, N-beta(aminoethyl)-gamma-aminopropylmethyldimethoxysilane, N-beta(aminoethyl)-gamma-aminopropyltrimethoxysilane, dodecyltrimethoxysilane, hexyltrimethoxysilane, methyltrimethoxysilane, methyltriethoxysilane, phenyltrimethoxysilane, dodecyltrichlorosilane, hexyltrichlorosilane, methyltrichlorosilane, and phenyltrichlorosilane can be given. As a method for bonding these silane compounds with the magnetic fine particles (b), for example, a method of mixing the magnetic fine particles (b) and a silane compound in an inorganic medium such as water, or in an inorganic medium such as an alcohol, an ether, a ketone, or an ester, heating the mixture while stirring, separating the magnetic fine particles (b) by decantation or the like, and removing the inorganic medium or organic medium by drying under reduced pressure can be given. The magnetic fine particles (b) and a silane compound may also be bonded by directly mixing them and heating the mixture. In these methods, the heating temperature is usually 30 to 100°C, and the heating time is about 0.5 to 2 hours. The amount of the silane compound to be used is appropriately determined according to the surface area of the magnetic fine particles (b), usually in a range from 1 to 50 parts by weight, and preferably from 2 to 30 parts by weight per 100 parts by weight of the magnetic fine particles (b).

As the surfactant represented by long-chain-fatty-acid soap, in addition to stearic acid (salt), oleic acid (salt), linolic acid (salt), linolenic acid (salt), ricinoleic acid (salt), erucic acid (salt), palmitic acid (salt), and myristic acid (salt), water-repelling agents such as pyridium salt water-repelling agent and methylol amide water-repelling agent can be given. As a method for bonding these surfactants with the magnetic fine particles (b), for example, a method of mixing the magnetic fine particles and the surfactant in an organic medium such as an alcohol, an ether, a ketone, an ester, or an alkane, or in water, heating the mixture while stirring, separating the magnetic fine particles by decantation or the like, and removing the organic medium or water by drying under reduced pressure can be given. In these methods, the heating temperature is usually 30 to 100°C, and the heating time is about 0.5 to 2 hours. The amount of the surfactant to be used is appropriately determined according to the surface area of the magnetic fine particles, usually in a range from 1 to 50 parts by weight, and preferably from 2 to 30 parts by weight per 100 parts by weight of the magnetic fine particles.

The ratio of the nuclear particles (a) to the magnetic fine particles (b) is preferably from 75:25 to 20:80. If the amount of the magnetic fine particles (b) is less than the amount of this range, magnetic separation properties may be inferior. If the amount of the magnetic fine particles (b) is more than this range, the amount of the nucleic particles (a) is comparatively excessive, resulting in a large amount of the magnetic fine particles (b) which are not made into a complex.

### 1.1.4. Mother particle coating layer (c)

As mentioned above, the mother particle coating layer (c) covers the nuclear particles (a) and the magnetic fine particles (b) of the magnetic mother particles (A). Specifically, in the magnetic mother particles (A), the mother particle coating layer (c) is formed to cover the mother particles (a) of which the surface is covered with the magnetic fine particles (b).

More specifically, the mother particle coating layer (c) can be formed by polymerization of a main raw material (a polymerizable monomer) in a solution containing the main raw material and, as required, side raw materials such as an initiator, an emulsifying agent, a dispersant, a surfactant, an electrolyte, a crosslinking agent, and a molecular weight-controlling agent, in the presence of the nuclear particles (a) having the magnetic fine particles (b) adsorbed on the surface. Inhibitors such as an iron ion can be prevented from flowing out of the magnetic fine particles (b) by forming the mother particle coating layer (c) by polymerization in this manner and, at the same time, the surface charges in the later-described aqueous medium can be adjusted by introducing desired functional groups onto the surface of the mother particle coating layer (c).

As the component for the mother particle coating layer (c), vinyl polymers are particularly preferable. As examples of vinyl monomers for producing such vinyl polymers, aromatic vinyl monomers such as styrene, alpha-methylstyrene, styrene halide, and divinylbenzene; vinyl esters such as vinyl acetate and vinyl propionate; unsaturated nitriles such as acrylonitrile; and ethylenically unsaturated alkyl carboxylates such as methyl acrylate, ethyl acrylate, ethyl methacrylate, butyl acrylate, butyl methacrylate, 2-ethylhexyl acrylate, 2-ethylhexyl methacrylate, lauryl acrylate, lauryl methacrylate, ethylene glycol diacrylate, ethylene glycol dimethacrylate, cyclohexyl acrylate, and cyclohexyl methacrylate can be given. The vinyl polymer may be a homopolymer or may be a copolymer comprising two or more monomers selected from the above-mentioned vinyl monomers.

Also, a copolymer of the above-mentioned vinyl monomers and copolymerizable monomers such as conjugated diolefins such as butadiene and isoprene, acrylic acid, methacrylic acid, acrylamide, methacrylamide, glycidyl acrylate, glycidyl methacrylate, N-methylolacrylamide, N-methylol methacrylamide, 2-hydroxyethyl acrylate, 2-hydroxyethyl methacrylate, diallyl phthalate, allyl acrylate, allyl methacrylate, trimethylolpropane triacylate, trimethylolpropane trimethacrylate, styrene sulfonic acid and sodium salt thereof, 2-acrylamide-2-methylpropanesulfonic acid and sodium salt thereof, isoprene sulfonic acid and sodium salt thereof, N,N-dimethylaminopropylacrylamide and methyl chloride quaternary salt thereof, and allylamine can be used.

As an initiator, an oil-soluble initiator and a water-soluble initiator can be used.

As examples of the oil-soluble initiator, peroxides and azo compounds such as benzoyl peroxide, lauroyl peroxide, tert-butylperoxy 2-ethylhexanoate, 3,5,5-trimethylhexanoyl peroxide, and azobisisobutyronitrile can be given.

As the water-soluble initiator, persulfates such as potassium persulfate, ammonium persulfate, and sodium persulfate; hydrogen peroxide; mineral acid salt of 2,2-azobis(2-aminopropane); and azobiscyanovaleric acid and the alkaline metal salt and ammonium salt thereof can be given. Redox initiators which are combinations of a persulfate or a hydrogen peroxide salt with sodium hydrogen sulfite, sodium thiosulfate, ferrous chloride, or the like can also be given. Persulfate is particularly suitably used. These initiators are used in an amount preferably of 0.01 to 8 wt% of the total amount of monomers.

An oil-soluble initiator is more preferable when the initiators are classified according to solubility in water. When a water-soluble initiator is used, hydrophobic monomers which do not contain magnetic material-coated particles tend to polymerize to produce a large amount of new particles formed only from the hydrophobic monomers, rather than polymerizing on the composite particle surface.

As an emulsifying agent, a commonly used anionic surfactant, cationic surfactant, or nonionic surfactant can be used independently or in combination of two or more. As examples of the anionic surfactant, in addition to anionic surfactants such as an alkali metal salt of a higher alcohol sulfate, an alkali metal salt of alkylbenzenesulfonic acid, an alkali metal salt of dialkyl succinate sulfonic acid, an alkali metal salt of alkyl diphenyl ether disulfonic acid, a sulfate salt of polyoxyethylene alkyl (or alkylphenyl) ether, a phosphate salt of polyoxyethylene alkyl (or alkylphenyl) ether, and a formalin condensate of sodium naphthalenesulfonate and the like, reactive anionic surfactants such as Latemul S-180A (manufactured by Kao Corp.), Eleminol JS-2 (manufactured by Sanyo Chemical Industries, Ltd.), Aquaron HS-10 and Aquaron KH-10 (manufactured by Daiichi Kogyo Seiyaku Co., Ltd.), and Adecalia Soap SE-10N and Adecalia Soap SR-10 (manufactured by Asahi Denka Kogyo Co., Ltd.) can be given.

As examples of the cationic surfactants, an alkylamine (salt), a polyoxyethylenealkylamine (salt), a quaternary alkylammonium salt, and an alkyl pyridinium salt can be given.

As examples of the nonionic surfactant, in addition to polyoxyethylene alkyl ether, polyoxyethylene alkyl phenyl ether, and the like, reactive nonionic surfactants such as Aquaron RS-20 (manufactured by Daiichi Kogyo Seiyaku Co., Ltd.), and Adekalia Soap NE-20 and Adekalia Soap RN-20 (manufactured by Asahi Denka Kogyo Co., Ltd.) can be given.

The method of adding monomers to the polymerization system for forming the mother particle coating layer (c) is not specifically limited. Any one of the method of adding all monomers at once, the method of adding the monomers in portions, or the method of continuously adding the monomers may be used. Although the polymerization temperature varies according to the initiators, the monomers are polymerized at a temperature usually from 10 to 90°C, and preferably from 30 to 85°C, for usually 1 to 30 hours.

### 1.2. Non-magnetic child particles (B)

The description of non-magnetic child particles in JP-A-2006-275600 applies to the composition, functional group, particle diameter, and the like of the non-magnetic child particles (B).

That is, the non-magnetic child particles (B) are basically made from a non-magnetic substance which can be either an organic substance or an inorganic substance, but preferably an organic substance. Polymers can be given as a typical organic material. As such a polymer, those given as the polymers for producing the nuclear particles (a) may be used. A functional group as a site for bonding a biochemical substance can be introduced by selecting the above-mentioned monomer components. Although not particularly limited, as examples of such a functional group, an amino group, a carboxyl group, a carbonyl group, an aldehyde group, a hydroxyl group, a mercapto group, a sulfone group, an isocyanate group, a thioisocyanate group, an epoxy group, a thioepoxy group, an aziridine group, and an oxazoline group can be given. There is no specific limitation to the manner of bonding of a functional group and a biochemical substance. For example, a covalent bond, an ionic bond, a metallic bond, and a coordinate bond can be given. Of these, a covalent bond or a metallic bond is preferable.

The particle diameter of the non-magnetic child particles (B), when the particle diameter of the magnetic mother particles (A) is d, is d/2 or less, preferably d/100 to d/4, and still more preferably d/50 to d/6. If the particle diameter of the non-magnetic child particles (B) is more than d/2, the non-magnetic child particles (B) may not be adsorbed on the magnetic mother particles (A), or even if adsorbed, the biochemical bonding capacity may be small.

In the magnetic particles according to this embodiment, the CV (coefficient of variation) value of a plurality of the non-magnetic child particles (B) existing on the surface of one magnetic mother particle (A) is 30% or less, preferably 20% or less, and more preferably 10% or less.

The non-magnetic child particles (B) preferably contain a carboxyl group. When a carboxyl group is introduced into the non-magnetic child particles (B), an acid monomer with solubility in water of 20% or less can increase the activity after bonding a biochemical substance. As examples of such an acid monomer, (meth)acrylic acid derivatives such as 2-(meth)acryloyloxyethyl succinate, 2-(meth)acryloyloxyethyl phthalate, 2-(meth)acryloyloxyethyl hexahydrophthalate, 2-(meth)acryloyloxypropyl succinate, 2-(meth)acryloyloxypropyl phthalate, and 2-(meth)acryloyloxypropyl hexahydrophthalate; aromatic derivatives such as p-vinylbenzoic acid, vinylphenylacetic acid, cinnamic acid; and unsaturated fatty acids such as myristoleic acid, palmitoleic acid, oleic acid, elaidic acid, vaccenic acid, gadoleic acid, erucic acid, nervonic acid, linolic acid, alpha-linolenic acid, eleostearic acid, stearidonic acid, arachidonic acid, eicosapentaenoic acid, clupanodonic acid, and docosahexaenoic acid can be given. Among these carboxylate monomers, in view of high sensitivity and ease of polymerization, a (meth)acrylic acid derivative is preferable. More preferable monomers are 2-(meth)acryloyloxyethyl succinate, 2-(meth)acryloyloxyethyl phthalate, and 2-(meth)acryloyloxyethyl hexahydrophthalate, with the most preferable monomer being 2-methacryloyloxyethyl phthalate.

### 1.3. Water-soluble polymer (C)

The water-soluble polymer (C) is a polymer capable of aggregating the non-magnetic child particles (B). As examples of the water-soluble polymer (C), a cationic polymer such as a polyvinylamine, a polyarylamine, a polyimine, a poly(meth)acrylate having a tertiary amino group, a poly(meth)acrylamide having a tertiary amino group, a poly(meth)acrylate having a quaternary ammonium group, a poly(meth)acrylamide having a quaternary ammonium group, a polyarginine, a polyornithine, a polylysine, and a chitosan; and an anionic polymer such as a polyacrylic acid, a polymethacrylic acid, a polyisoprene sulfonic acid, a polystyrene sulfonic acid, a carboxymethylcellulose, a polyaspartic acid, and a polyglutamic acid can be given. When considering the activity after the biochemical bonding, a water-soluble polymer having a primary amino group such as a polyvinylamine and a polyarylamine is particularly preferable for the water-soluble cationic polymer.

The molecular weight of the water-soluble polymer (C) is preferably 10,000 or more, and more preferably 100,000 or more. If less than 10,000, stacking of the non-magnetic child particles (B) is insufficient, possibly resulting in insufficient biochemical bonding.

The magnetic particles according to this embodiment can prevent dissociation of the non-magnetic child particles (B) by having the water-soluble polymer (C) between the stacked non-magnetic child particles (B).

### 1.4. Polymer layer (D)

The magnetic particles according to this embodiment may optionally include the polymer layer (D) as described above. The polymer layer (D) covers the magnetic mother particles (A) and the non-magnetic child particles (B). Specifically, the polymer layer (D) is formed to cover the magnetic mother particles (A) which are already covered by the non-magnetic child particles (B).

The component, raw material, and method of production of the polymer layer (D) are the same as the component, raw material, and method of production of the above-mentioned mother particle coating layer (c).

Specifically, the polymer layer (D) can be formed by polymerization of a main raw material (a polymerizable monomer) in a solution containing the main raw material and, as required, side raw materials such as an initiator, an emulsifying agent, a dispersant, a surfactant, an electrolyte, a crosslinking agent, and a molecular weight controlling agent, in the presence of the magnetic mother particles (A) having the non-magnetic child particles (B) (and preferably the water-soluble polymer (C)) adsorbed on the surface. Inhibitors such as an iron ion can be prevented from flowing out of the magnetic mother particles (A) by forming the polymer layer (D) because the polymer layer (D) can prevent the non-magnetic child particles (B) from desorpting from the magnetic mother particles (A).

A site for bonding biochemical substances can be provided by introducing a desired functional group on the surface of the polymer layer (D). For example, the polymer layer (D) preferably contains a carboxyl group. When a carboxyl group is introduced into the polymer layer (D), an acid monomer with solubility in water of 20% or less can increase the activity after bonding a biochemical substance. The specific examples and preferable examples of such a monomer are as described in "1.2. Non-magnetic child particles (B)" above.

### 1.5. Application

The magnetic particles according to this embodiment can be used in a wide variety of fields such as the biochemistry field, paints, papers, electronic photographs, cosmetics, medical supplies, agricultural chemicals, foods, and catalysts.

The magnetic particles according to this embodiment are mainly used as a biochemical carrier. Elution of impurities from the particles, elution of the magnetic fine particles themselves, and elution of impurities from the magnetic fine particles are undesirable for use as a biochemical carrier. The magnetic particles according to this embodiment are particularly suitable for carrier particles for diagnosis because the magnetic particles according to this embodiment do not have the above undesirable effects. Furthermore, the magnetic particles according to this embodiment have an excellent biochemical bonding capacity because of the possession of surface irregularities, which provide a large area for field of reaction.

Examples of using the magnetic particles according to this embodiment as the carrier particles for diagnosis are: collecting and concentrating an antigen (a chemical substance such as a virus, a bacteria, a cell, a hormone, a dioxin) by bonding the antigen to an antibody which is bonded to the magnetic particles according to this embodiment; collecting and detecting a nucleic acid analog (e.g. DNA) by bonding the nucleic acid analog to a nucleic acid using hybridization, in which the nucleic acid analog is bonded to the magnetic particles according to this embodiment; collecting and detecting a chemical substance (e.g. a protein and a pigment) bonded to a nucleic acid by bonding the chemical substance to the nucleic acid analog which is bonded to the magnetic particles according to this embodiment; collecting and detecting a biotin or an avidin by bonding a molecule having a biotin or an avidin to the avidin or the biotin which is bonded to the magnetic particles according to this embodiment; and using the magnetic particles according to this embodiment as a carrier in Enzyme-linked Immunosorbent Assay using a colorimetry method and chemiluminescence by bonding an antibody or antigen to the magnetic particles according to this embodiment. If the magnetic particles according to this embodiment are used, any diagnostic items using a 96-well plate or the like as a carrier can generally be replaced with an automatic analyzer using magnetism. Examples of diagnostic substances are: tissue-derived proteins, hormones such as luteinizing hormone and thyroid-stimulating hormone; proteins used as a marker for various cancer cells, prostate specific antigen, bladder cancer, and the like; viruses such as hepatitis B virus, hepatitis C virus, and herpes simplex virus; bacteria such as a gonococcus and MRSA; fungi such as candida and Cryptococcus; protozoa and parasites such as Toxoplasma gondii; proteins and nucleic acids which are components of the viruses, bacteria, fungi, protozoa and parasites; environmental pollutants such as dioxins; chemical materials such as medicines (e.g. antibiotics and antiepileptic drugs).

The field of application of the magnetic particles according to this embodiment is not limited to the carrier for biochemical substances, but includes the above-mentioned various fields.

### 2. Method for producing magnetic particles

A method for producing the magnetic particles according to one embodiment of the invention comprises mixing, in an aqueous medium, the magnetic mother particles (A) with a particle diameter of d, having positive or negative surface charges in an aqueous medium, the non-magnetic child particles (B) with a particle diameter of d/2 or less, having negative or positive surface charges in the aqueous medium, and the water-soluble polymer (C) having positive or negative charges in the aqueous medium, to have the water-soluble polymer (C) cause the non-magnetic child particles (B) to be adsorbed onto the surface of the magnetic mother particles (A). The above method may further comprise covering composite particles obtained in the above adsorption with the polymer layer (D).

More specifically, the method for producing the magnetic particles according to this embodiment may comprise a first step of mixing, in an aqueous medium, the magnetic mother particles (A) with a particle diameter of d, having positive or negative surface charges in the aqueous medium, the non-magnetic child particles (B) with a particle diameter of d/2 or less, having negative or positive surface charges in the aqueous medium to cause the non-magnetic child particles (B) to be adsorbed onto the surface of the magnetic mother particles (A), a second step of mixing, in the aqueous medium, the first composite particles obtained in the first step with the water-soluble polymer (C) having positive or negative charges in the aqueous medium to cause the water-soluble polymer (C) to be adsorbed between the non-magnetic child particles (B), and a third step of mixing the non-magnetic child particles (B) having negative or positive surface charges in the aqueous medium with the second composite particles obtained in the second step to cause the non-magnetic child particles (B) to be adsorbed onto the surface of the second composite particles. The above method may further comprise a fourth step of covering the third composite particles obtained in the third step with a polymer layer (D).

The magnetic mother particles (A) may have a positive surface charge in the aqueous medium and the magnetic child particles (B) may have a negative surface charge in the aqueous medium, and the water-soluble polymer (C) may have a positive charge in the aqueous medium.

As a typical method, a method of producing the first composite particles by causing the non-magnetic child particles (B) to be adsorbed on the surface of the magnetic mother particles (A) (first step), causing the water-soluble polymer (C) to be adsorbed onto the surface of the first composite particles to obtain a second composite particles (second step), causing the non-magnetic child particles (B) to be adsorbed onto the surface of the second composite particles to obtain third composite particles (third step), and finally, as required, covering the surface of the third composite particles with a polymer layer (D) (fourth step) can be given. Three or more layers of non-magnetic child particles (B) may be produced by alternately repeating the second step and the third step before proceeding to the fourth step. The first to fourth steps are described below.

### 2.1. First step

As a first step (adsorption of the non-magnetic child particles (B) on the surface of the magnetic mother particles (A)), using Coulomb attraction is suitable besides the physical adsorption of the non-magnetic child particles (B) on the surface of the magnetic mother particles (A). The method of using Coulomb attraction is as described above. To have the non-magnetic child particles (B) adsorbed on the surface of the magnetic mother particles (A), the magnetic mother particles (A) having positive surface charges in the aqueous medium and the non-magnetic child particles (B) having negative surface charges in the aqueous medium are preferably mixed in the aqueous medium. When mixing, in an aqueous medium, the magnetic mother particles (A) having positive or negative surface charges in the aqueous medium and the non-magnetic child particles (B) having opposite surface charges in the aqueous medium, it is preferable to gradually add the magnetic mother particles (A) while stirring the non-magnetic child particles (B) and/or ultrasonically dispersing the non-magnetic child particles (B).

The mixing ratio of the magnetic mother particles (A) and the non-magnetic child particles (B) varies depending on the ratio of the particle diameters. The magnetic particles according to this embodiment are easily produced if the ratio is such that the unadsorbed non-magnetic child particles (B) remain as a residue after completion of adsorption because the dispersion system is stabilized at such a ratio.

The residue of the non-magnetic child particles (B) is easily separated and purified by magnetic separation. The particles produced in the first step are referred to as first composite particles in the invention. The positive/negative surface charges of the first composite particles usually agree with the positive/negative surface charges of the non-magnetic child particles (B).

### 2.2. Second step

As a second step (adsorption of the water-soluble polymer (C) on the surface of the first composite particles), using Coulomb attraction is suitable besides the physical adsorption of the water-soluble polymer (C) having surface charges opposite to the first composite particles on the surface of the first composite particles. Specifically, it is suitable to electrically adsorb a cationic water-soluble polymer when the first composite particles have negative surface charges, and it is suitable to electrically adsorb an anionic water-soluble polymer when the first composite particles have positive surface charges.

As the second step, it is preferable to mix the first composite particles having negative surface charges and the cationic polymer in the aqueous medium.

When mixing, in the aqueous medium, the first composite particles having positive or negative surface charges in the aqueous medium and the water-soluble polymer (C) having the opposite surface charge in the aqueous medium, it is preferable to gradually add the first composite particles while stirring the water-soluble polymer (C) and/or ultrasonically dispersing the water-soluble polymer (C).

The mixing ratio of the first composite particles and the water-soluble polymer (C) varies depending on the ratio of the amounts of charges. The magnetic particles according to this embodiment are easily produced if the ratio is such that the unadsorbed water-soluble polymer (C) remains as a residue after completion of adsorption because the dispersion system is stabilized at such a ratio.

The residue of the water-soluble polymer (C) is easily separated and purified by magnetic separation. The particles produced in the second step are referred to as second composite particles in the invention. The positive/negative surface charges of the second composite particles usually coincide with the positive/negative surface charges of the water-soluble polymer (C).

### 2.3. Third step

As a third step (adsorption of the non-magnetic child particles (B) on the surface of the second composite particles), using Coulomb attraction is suitable besides the physical adsorption of the non-magnetic child particles (B) to the surface of the second composite particles. To have the non-magnetic child particles (B) adsorbed on the surface of the second composite particles, the second composite particles having positive surface charges in the aqueous medium and the non-magnetic child particles (B) having negative surface charges in the aqueous medium are preferably mixed in the aqueous medium.

When mixing, in the aqueous medium, the second composite particles having positive or negative surface charges in the aqueous medium and the non-magnetic child particles (B) having opposite surface charges in the aqueous medium, it is preferable to gradually add the second composite particles while stirring the non-magnetic child particles (B) and/or ultrasonically dispersing the non-magnetic child particles (B).

The mixing ratio of the second composite particles and the non-magnetic child particles (B) varies depending on the ratio of amounts of charges. The magnetic particles according to this embodiment are easily produced if the ratio is such that the unadsorbed non-magnetic child particles (B) remain as a residue after completion of adsorption because the dispersion system is stabilized at such a ratio. The residue of the non-magnetic child particles (B) is easily separated and purified by magnetic separation.

The particles produced in the third step are referred to as third composite particles in the invention. The positive/negative surface charges of the third composite particles usually agree with the positive/negative surface charges of the non-magnetic child particles (B). The third composite particles may be directly used as the magnetic particles according to this embodiment.

### 2.4. Fourth step

The production method of the polymer layer (D) in a fourth step (covering the third composite particles with the polymer layer (D)) is the same as the production method of the mother particle coating layer as described above. Coating the third composite particles with the polymer layer (D) prevents destruction of the particle structure caused by ultrasonic dispersion, intensive washing, and the like.

### 3. Examples

The invention will now be described in more detail by way of examples, which should not be construed as limiting the invention.

### 3.1. Evaluation Method

The amount of an antibody bonded to the magnetic particles obtained in the examples and comparative examples was measured by the following method. The particle diameters were measured by the following method unless otherwise explained.

### 3.1.1. Bonding amount of antibody

The magnetic particles obtained in the examples and comparative examples were activated by EDC in a MES buffer solution at a pH of 4.7. After washing the particles, 10 micrograms of Rabbit Polyclonal IgG per 1 mg of the magnetic particles were added at room temperature and reacted for 16 hours. After washing, the amount of the Rabbit IgG bonded to the magnetic particles was measured by BCA assay. The amount of the Rabbit IgG bonded to the magnetic particles is shown by the weight of IgG per 1 mg of the magnetic particles (microgram/mg).

### 3.1.2. Particle diameter

The diameter of particles with a diameter of 1 micrometer or more was measured using Laser Diffraction Particle Size Analyzer "SALD-200V" manufactured by Shimadzu Corporation, and the diameter of particles with a diameter of less than 1 micrometer was measured using "LS 13 320" Laser Diffraction Particle Size Analyzer manufactured by Beckman Coulter K.K.

### 3.2. Preparation of magnetic mother particles (A)

### 3.2.1. Preparation of nuclear particles (a-1)

After polymerizing a styrene-divinylbenzene copolymer (96:4) referring to the polymerization method in JP-A-07-238105 (e.g. Examples 1 and 2), the reaction solution was washed with water, and the supernatant was separated by centrifugation. After repeating the washing and separation operation five times, the lower layer of the slurry was dried at 60°C for 24 hours to obtain powdered nuclear particles (a-1) with an average particle diameter of 1.5 micrometers.

### 3.2.2. Formation of magnetic material-coated particles

According to Example 2 in JP-A-2004-205481, acetone was added to an oily magnetic fluid "EXP series" (manufactured by Ferrotec Corporation) (fine particles of a mixture of Fe₃O₄ and gamma-Fe₂O₃ of which the surface was treated with oleic acid and a silane coupling agent) to precipitate the particles. The precipitate was dried to obtain 10 g of magnetic fine particles (b-1) with a hydrophobized surface.

Then, 10 g of the nuclear particles (a-1) obtained in 3.2.1 and 10 g of the magnetic fine particles (b-1) were mixed. The mixture was processed using a hybridization system ("Type NHS-0" manufactured by Nara Machinery Co., Ltd.) at a peripheral blade speed (stirring blade) of 100 m/sec (16,200 rpm) for 5 minutes to obtain magnetic material-coated particles (nuclear particles (a-1) covered with the magnetic fine particles (b-1)).

### 3.2.3. Formation of mother particle coating layer (c-1)

A 1-liter separable flask was charged with 30 g of the magnetic material-coated particles obtained in 3.2.2 and, as a dispersant, 750 g of an aqueous solution containing 0.25 % of a nonionic emulsifying agent ("Emulgen 150" manufactured by Kao Corporation) and 0.25 % of a cationic emulsifying agent ("Coatamine 24P" manufactured by Kao Corporation) to sufficiently disperse the magnetic material-coated particles. Another container was charged with 150 g of an aqueous solution containing 0.25 % of a nonionic emulsifying agent ("Emulgen 150") and 0.25 % of a cationic emulsifying agent ("Coatamine 24P"). 30 g of cyclohexyl methacrylate and 7.5 g of N,N-dimethylaminopropylacrylamide as monomers and 1.5 g of tert-butylperoxy-2-ethylhexanate ("Perbutyl O" manufactured by NOF Corporation) as an initiator were added to the container and mixed to obtain a monomer emulsion. Next, the content of the separable flask was stirred at a speed of 200 rpm using an anchor blade. After increasing the temperature to 60°C while perging with N₂ gas, the monomer emulsion was continuously added to the separable flask over two hours. After the addition, the mixture was stirred at 80°C for two hours to complete the reaction, thereby forming a mother particle coating layer (c-1). The resulting aqueous dispersion of the magnetic mother particles was purified by magnetism and centrifugation. The magnetic mother particles prepared in this manner are referred to as magnetic mother particles (A-1). The diameter of the magnetic mother particles (A-1) measured using a Laser Diffraction Particle Size Analyzer (manufactured by Shimadzu Corporation) was 2.5 micrometers.

### 3.3. Preparation of magnetic particles

### 3.3.1 Example 1

A beaker was charged with 1000 g of an aqueous dispersion containing 5 g of the non-magnetic child particles (B-1) having an average particle diameter of 0.06 micrometers formed of a styrene-methacrylic acid (95:5) copolymer. 500 g of an aqueous solution containing 6 g of the magnetic mother particles (A-1), 50 g of 0.1M hydrochloric acid, and 0.5 % of a nonionic emulsifying agent ("Emulgen 150") which was previously prepared in another container was added dropwise to the beaker while indirectly applying ultrasonic waves in a water bath, to cause the non-magnetic child particles (B-1) to be adsorbed on the surface of the magnetic mother particles (A-1). The resulting particle dispersion was purified by magnetism to obtain first composite particles (P1-1) having the non-magnetic child particles (B-1) adsorbed on the surface of the magnetic mother particles (A-1).

A beaker was charged with 1000 g of an aqueous solution containing 30 g of polyarylamine (C-1) having a molecular weight of 150,000. While indirectly applying ultrasonic wave in a water bath, 500 g of an aqueous solution containing 6 g of the first composite particles (P1-1) which was previously mixed in another container and 0.5% of a nonionic emulsifying agent ("Emulgen 150") was added dropwise to the beaker to cause the polyarylamine (C-1) to be adsorbed on the surface of the first composite particles (P1-1). The resulting particle dispersion was purified by magnetism to obtain second composite particles (P1-2).

A beaker was charged with 1000 g of an aqueous dispersion containing 5 g of the non-magnetic child particles (B-1). While indirectly applying ultrasonic waves in a water bath, 500 g of an aqueous solution containing 6 g of the second composite particles (P1-2) which was previously mixed in another container, 50 g of O.1M hydrochloric acid, and 0.5% of a nonionic emulsifying agent ("Emulgen 150") was added dropwise to the beaker to cause the non-magnetic child particles (B-1) to be adsorbed on the surface of the second composite particles (P1-2). The resulting particle dispersion was purified by magnetism to obtain third composite particles (P1-3).

A 500 ml separable flask was charged with 6 g of the third composite particles (P1-3) and 150 g of an aqueous solution containing 0.5% of a nonionic emulsifying agent ("Emulgen 150"). The third composite particles were sufficiently dispersed. Another container was charged with 0.75 g of an aqueous solution containing 0.5 % of a nonionic emulsifying agent ("Emulgen 150"). 0.15 g of cyclohexyl methacrylate and 0.0375 g of methacrylic acid as monomers and 0.0075 g of tert-butylperoxy-2-ethylhexanate as an initiator were added to the solution and mixed to obtain a monomer emulsion. Next, while stirring at 200 rpm using an anchor blade and perging with N₂ gas, all of the monomer emulsion was added to the separable flask. The mixture was continuously stirred at 80°C for three hours to form a polymer layer (D-1) on the surface of the third composite particles (P1-3).

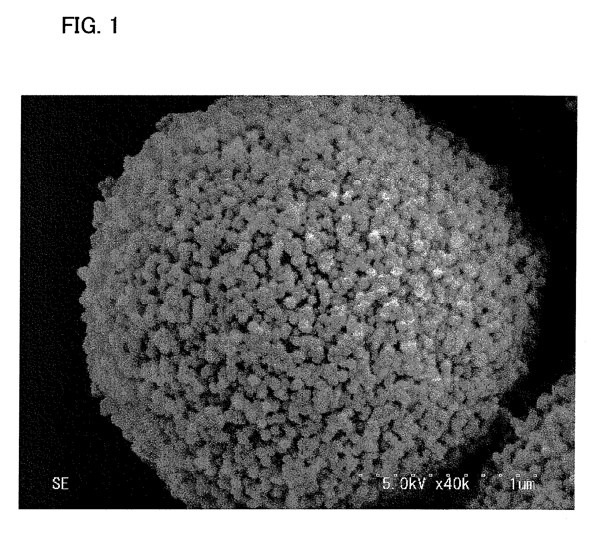

The resulting aqueous dispersion of magnetic particles (1) was purified by magnetism and centrifugation. The particle diameter of the magnetic particles (1) was 2.6 micrometers. The magnetic particles (1) were observed using a scanning electron microscope (SEM) to confirm that the non-magnetic child particles (B-1) were stacked on the surface of the magnetic mother particles (A-1) (see FIG. 1).

The bonding amount of antibody of the magnetic particles (1) produced in Example 1 was 6.3 micrograms/mg.

### 3.3.2 Example 2

Magnetic particles (2) were obtained in the same manner as in Example 1 except for using the non-magnetic child particles (B-2) having an average particle diameter of 0.09 micrometers formed of a copolymer of styrene and 2-methacryloyloxyethyl succinate (80:20) instead of the non-magnetic child particles (B-1) and using 0.06 g of 2-methacryloyloxyethyl succinate instead of 0.15 g of cyclohexyl methacrylate and 0.0375 g of methacrylic acid as the monomer for forming the polymer layer (D-1). The particle diameter of the magnetic particles (2) was 2.7 micrometers. The magnetic particles (2) were observed using a scanning electron microscope (SEM) to confirm that the non-magnetic child particles (B-2) were stacked on the surface of the magnetic mother particles (A-1). The bonding amount of antibody of the magnetic particles (2) produced in Example 2 was 7.5 micrograms/mg.

### 3.3.3. Comparative Example 1

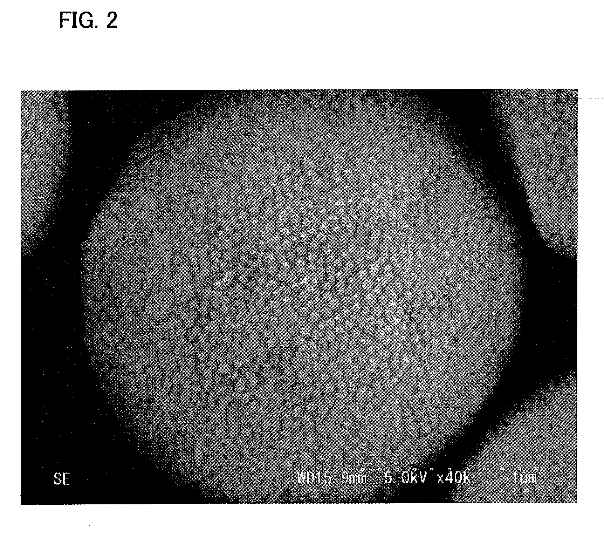

The first composite particles (P1-1) were observed using a scanning electron microscope (SEM) to find that the only one layer of the non-magnetic child particles (B-1) was adsorbed on the surface of the magnetic mother particles (A-1). No stacking was observed (see FIG 2). The bonding amount of antibody of the first composite particles (P1-1) was 3.2 micrograms/mg.

Although only some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention.

Magnetic particles comprise magnetic mother particles (A) having a particle diameter of d and non-magnetic child particles (B) having a particle diameter of d/2 or less stacked on the surface of the magnetic mother particles (A).

## Claims

1. Magnetic particles comprising:
magnetic mother particles (A) having a particle diameter of d and,
non-magnetic child particles (B) having a particle diameter of d/2 or less stacked on the surface of the magnetic mother particles (A).

2. The magnetic particles according to claim 1,
further comprising a water-soluble polymer (C) existing between the stacked non-magnetic child particles (B).

3. The magnetic particles according to claim 1 or 2,
further comprising a polymer layer (D) covering the magnetic mother particles (A) and the non-magnetic child particles (B).

4. A method for producing magnetic particles comprising mixing, in an aqueous medium, magnetic mother particles (A) with a particle diameter of d, having positive or negative surface charges in the aqueous medium, non-magnetic child particles (B) with a particle diameter of d/2 or less, having negative or positive surface charges in the aqueous medium, and a water-soluble polymer (C) having positive or negative charges in the aqueous medium, to cause the non-magnetic child particles (B) to be adsorbed on the surface of the magnetic mother particles (A), the water-soluble polymer (C) existing between the non-magnetic particles (B).

5. The method for producing magnetic particles according to claim 4,
further comprising covering the composite particles obtained in the adsorption step with a polymer layer (D).

6. A method for producing magnetic particles comprising:
a first step of mixing, in an aqueous medium, magnetic mother particles (A) with a particle diameter of d, having positive or negative surface charges in the aqueous medium, the non-magnetic child particles (B) with a particle diameter of d/2 or less, having negative or positive surface charges in the aqueous medium, to cause the non-magnetic child particles (B) to be adsorbed on the surface of the magnetic mother particles (A);
a second step of mixing, in the aqueous medium, the first composite particles obtained in the first step with a water-soluble polymer (C) having positive or negative charges in the aqueous medium, to cause the water-soluble polymer (C) to be adsorbed between the non-magnetic child particles (B); and
a third step of mixing, in the aqueous medium, the non-magnetic child particles (B) having negative or positive surface charges in the aqueous medium with the second composite particles obtained in the second step to cause the non-magnetic child particles (B) to be adsorbed on the surface of the second composite particles.

7. The method for producing magnetic particles according to claim 6, further comprising a fourth step of covering the third composite particles obtained in the third step with the polymer layer (D).

8. The method for producing magnetic particles according to any one of claims 4 to 7,
wherein the magnetic mother particles (A) have positive surface charges in the aqueous medium, the magnetic child particles (B) have negative surface charges in the aqueous medium, and the water-soluble polymer (C) has positive charges in the aqueous medium.

9. A biochemical carrier obtained by the method for producing magnetic particles according to any one of claims 4 to 8.
